# EUROPEAN PATENT APPLICATION

(11) **EP 2 708 851 A2**
(43) Date of publication of application: **19.03.2014**
(21) Application number: 13183251.1
(22) Date of filing: 05.09.2013
(51) Int. Cl.: G01C 23/00, G06F 3/0488

(54) **Systems and methods for shared situational awareness using telestration**

(30) Priority: 12.09.2012 US 201213612710
(71) Applicant: Honeywell International Inc., Morristown, NJ 07962-2245 (US)
(72) Inventor: Letsu-Dake, Emmanuel, Morristown, NJ 07962-2245 (US)
(74) Representative: Houghton, Mark Phillip

(57) **Abstract**

Methods and apparatus are provided for shared situational awareness between a first display and a second display onboard an aircraft. The first display and the second display are associated with a respective first user input device and second user input device that each receive user input with respect to the first display and the second display. The method includes receiving a request to activate a shared situational awareness system to enable telestration between the first display and the second display. The method also includes determining, based on user input received from the first user input device and the second user input device, if a request to change a background image displayed on the first display and the second display has been received, and outputting a different background image for display on the first display and the second display, which is generated from data relating to the operation of the aircraft.

## Description

### TECHNICAL FIELD

The present disclosure generally relates to shared situational awareness, and more particularly relates to systems and methods for shared situational awareness using telestration.

### BACKGROUND

In one example, a flight deck of an aircraft can include an interactive display device for use by a pilot, and a separate interactive display device for a co-pilot. These displays can provide the pilot and co-pilot with information regarding the operation of the aircraft, such as weather, air traffic information, etc. Currently, the pilot may interact with the pilot's interactive display device and the co-pilot may interact with the co-pilot's interactive display device, but there is no way for the pilot to share data on the pilot's interactive display device with the co-pilot or for the co-pilot to share data on the co-pilot's interactive display device with the pilot. In addition, there is currently no way for the pilot to interact with data displayed on the co-pilot's interactive display device or for the co-pilot to interact with data displayed on the pilot's interactive display device.

Hence, there is a need for shared communications between the pilot and co-pilot, which can lead to shared situational awareness regarding the operation of the aircraft between the pilot and co-pilot.

### BRIEF SUMMARY

An apparatus is provided for shared situational awareness between a first display and a second display onboard an aircraft. Each of the first display and the second display can be associated with a respective first user input device and second user input device that each receive user input with respect to the first display and the second display. The apparatus comprises a source of data regarding the operation of the aircraft. The apparatus also includes an illustration control module that receives user selection data and user input data from the first user input device and the second user input device and that sets illustration data based on the user selection data and user input data. The apparatus further comprises a graphical user interface manager control module that outputs a graphical user interface that includes the data regarding the operation of the aircraft and the illustration data, with the graphical user interface being displayed on both the first display and the second display to enable shared situational awareness between the first display and the second display.

A method is provided for shared situational awareness between a first display and a second display onboard an aircraft. The first display and the second display are associated with a respective first user input device and second user input device that each receive user input with respect to the first display and the second display. The method includes receiving a request to activate a shared situational awareness system to enable telestration between the first display and the second display. The method also includes determining, based on user input received from the first user input device and the second user input device, if a request to change a background image displayed on the first display and the second display has been received, and outputting a different background image for display on the first display and the second display, which is generated from data relating to the operation of the aircraft.

Furthermore, other desirable features and characteristics of the systems and methods will become apparent from the subsequent detailed description and the appended claims, taken in conjunction with the accompanying drawings and the preceding background.

### BRIEF DESCRIPTION OF THE DRAWINGS

The present disclosure will hereinafter be described in conjunction with the following drawing figures, wherein like numerals denote like elements, and wherein:

FIG. 1 is a functional block diagram illustrating an aircraft that includes a shared situational awareness system in accordance with an exemplary embodiment;

Fig. 2 is a dataflow diagram illustrating a control system of the shared situational awareness system in accordance with an exemplary embodiment;

Fig. 3 is an exemplary weather graphical user interface in accordance with an exemplary embodiment;

Fig. 4 is the exemplary weather graphical user interface of Fig. 3 that illustrates an exemplary display selector in accordance with an exemplary embodiment;

Fig. 5 is the exemplary weather graphical user interface of Fig. 3 that illustrates an exemplary illustrator selector in accordance with an exemplary embodiment;

Fig. 6 is the exemplary weather graphical user interface of Fig. 3 in accordance with an exemplary embodiment;

Fig. 7 is the exemplary weather graphical user interface of Fig. 3 that illustrates an exemplary symbol selector in accordance with an exemplary embodiment;

Fig. 8 is an exemplary in-trail procedure graphical user interface in accordance with an exemplary embodiment;

Fig. 9 is an exemplary four-dimensional trajectory (4DT) graphical user interface in accordance with an exemplary embodiment;

Fig. 10 is an exemplary traffic graphical user interface in accordance with an exemplary embodiment;

Fig. 11 is an exemplary taxiway graphical user interface in accordance with an exemplary embodiment;

Fig. 12 is a flowchart illustrating a control method of the shared situational awareness system in accordance with an exemplary embodiment; and

Fig. 13 is a continuation of the flowchart of Fig. 12.

### DETAILED DESCRIPTION

The following detailed description is merely exemplary in nature and is not intended to limit the present disclosure or the application and uses of the present teachings. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the present teachings and not to limit the scope of the present disclosure which is defined by the claims. Furthermore, there is no intention to be bound by any expressed or implied theory presented in the preceding technical field, background, brief summary, or the following detailed description.

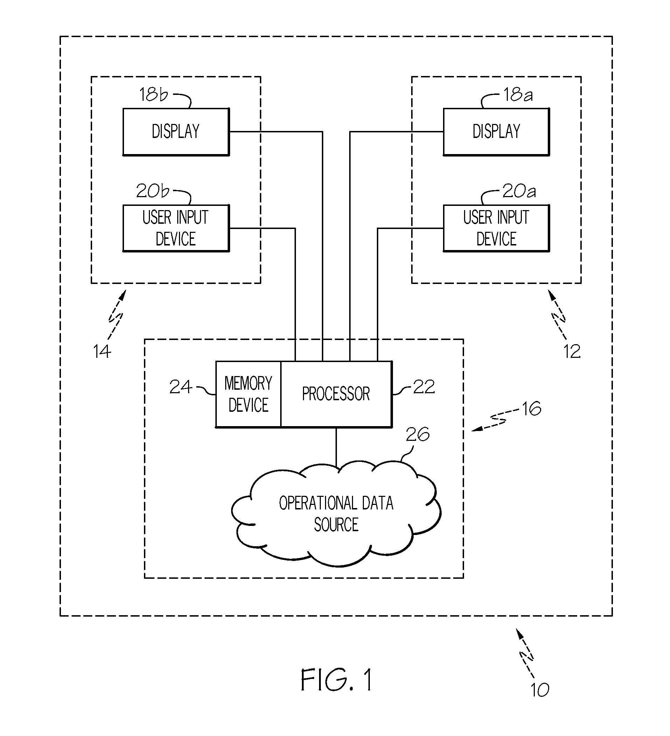

With reference to Fig. 1, a mobile platform, for example, but not limited to, an aircraft 10 is shown. The aircraft 10 can include a first device 12 and a second device 14. The first device 12 and the second device 14 can be in communication with each other over a suitable wired or wireless link. The first device 12 and second device 14 can comprise any suitable electronic device that enables the display and manipulation of data, such as, but not limited to a handheld computing device, a tablet computing device, a stationary computing device, personal digital assistant, a portion of an electronic flight deck, etc. The first device 12 and second device 14 can be in communication with a shared situational awareness system 16 through any suitable wired or wireless link. As will be discussed herein, the shared situational awareness system 16 can enable the display of shared information on the first device 12 and second device 14. It should be noted that although the shared situational awareness system 16 is described and illustrated herein as being used with the first device 12 and second device 14 on an aircraft 10, the shared situational awareness system 16 could also be employed with ground based devices where shared information is desirable, such as television broadcasts, surgical procedures, etc. Generally, the first device 12 can be positioned adjacent and for use by a pilot of the aircraft 10, while the second device 14 can be positioned adjacent and for use by a co-pilot of the aircraft 10. The shared situational awareness system 16 can enable the pilot and the co-pilot to share data by interacting with substantially the same graphical user interface (GUI) displayed on both the first device 12 and the second device 14. With continued reference to Fig. 1, the first device 12 and second device 14 can each include a respective display 18a, 18b and a user input device 20a, 20b.

The displays 18a, 18b can display various images and data, in both a graphical and textual format. In one example, the displays 18a, 18b can each display one or more shared GUIs generated by the shared situational awareness system 16. The displays 18a, 18b can comprise any suitable technology for displaying information, including, but not limited to, a liquid crystal display (LCD), organic light emitting diode (OLED), plasma, or a cathode ray tube (CRT). The displays 18a, 18b can be in communication with the shared situational awareness system 16 for receiving data from the shared situational awareness system 16. Those skilled in the art realize numerous techniques to facilitate communication between the displays 18a, 18b and the shared situational awareness system 16.

The user input devices 20a, 20b can receive data and/or commands from the operator of the first device 12 and second device 14, respectively. The user input devices 20a, 20b can be in communication with the shared situational awareness system 16 such that the data and/or commands input by the operator can be received by the shared situational awareness system 16. Those skilled in the art realize numerous techniques to facilitate communication between the user input devices 20a, 20b and the shared situational awareness system 16. The user input devices 20a, 20b can be implemented with any suitable technology, including, but not limited to, a touchscreen interface (e.g., overlaying the displays 18a, 18b), a touch pen, a keyboard, a number pad, a mouse, a touchpad, a roller ball, a pushbutton, a switch, speech recognition technology, voice commands, etc.

The shared situational awareness system 16 can include a processor 22 for generating one or more graphical user interfaces that enable shared situational awareness, and a memory device 24 for storing data. In one embodiment, the entire shared situational awareness system 16 can be disposed aboard the aircraft 10 for assisting in operations of the aircraft 10. However, in other embodiments, all or part of the shared situational awareness system 16 may be disposed apart from the aircraft 10. The processor 22 of the illustrated embodiment is capable of executing one or more programs (i.e., running software) to perform various tasks instructions encoded in the program(s). The processor 22 may be a microprocessor, microcontroller, application specific integrated circuit (ASIC) or other suitable device as realized by those skilled in the art. Of course, the shared situational awareness system 16 may include multiple processors 22, working together or separately, as is also realized by those skilled in the art.

The memory device 24 is capable of storing data. The memory device 24 may be random access memory (RAM), read-only memory (ROM), flash memory, a memory disk (e.g., a floppy disk, a hard disk, or an optical disk), or other suitable device as realized by those skilled in the art. In the illustrated embodiments, the memory device 24 is in communication with the processor 22 and stores the program(s) executed by the processor 22. Those skilled in the art realize that the memory device 24 may be an integral part of the processor 22. Furthermore, those skilled in the art realize that the shared situational awareness system 16 may include multiple memory devices 24.

The shared situational awareness system 16 can receive data from an operational data source 26. The operational data source 26 can be in communication with the processor 22 for providing the processor 22 with data for generating one or more of the graphical user interfaces. The operational data source 26 can comprise any suitable source of operational data related to the operation of the aircraft 10, including, but not limited to, systems onboard or external to the aircraft 10. In one example, the operational data source 26 can provide the processor 22 with data relating to air traffic, weather, airspeed, altitude, four-dimensional trajectory of the aircraft 10, flight plan, etc.

The shared situational awareness system 16 can enable the sharing of data between the pilot and the co-pilot over the first device 12 and the second device 14. In this regard, as will be discussed, when active, the shared situational awareness system 16 can enable shared illustrations and annotations by displaying the same display on the first device 12 and second device 14. This can enable the pilot and the co-pilot to communicate regarding the operation of the aircraft 10 on the substantially same background image in substantially real-time.

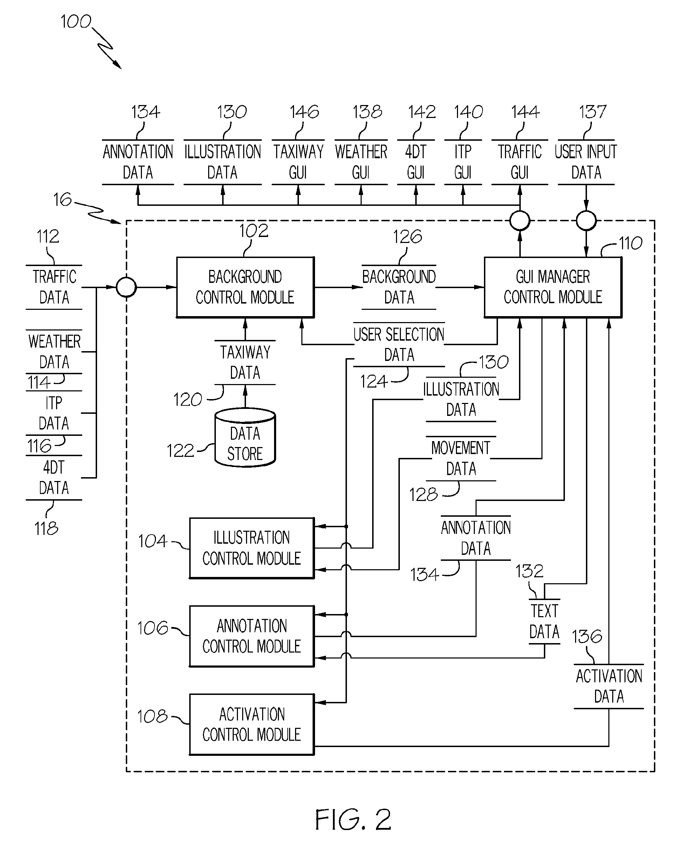

Referring now to Fig. 2, a dataflow diagram illustrates various embodiments of the shared situational awareness system 16 that may be embedded within a control module 100 and performed by the processor 22 (Fig. 1). Various embodiments of the shared situational awareness system 16 according to the present disclosure can include any number of sub-modules embedded within the control module 100. As can be appreciated, the sub-modules shown in Fig. 2 can be combined and/or further partitioned to determine the shared display output by the displays 18a, 18b (Fig. 1). Inputs to the system may be sensed from the aircraft 10 (Fig. 1), received from other control modules (not shown), and/or determined/modeled by other sub-modules (not shown) within the control module 100. In various embodiments, the control module 100 can include a background control module 102, an illustration control module 104, an annotation control module 106, an activation control module 108 and a GUI manager control module 110.

The background control module 102 can receive as input traffic data 112, weather data 114, in-trail procedure (ITP) data 116, and 4DT data 118. The background control module 102 can also receive as input taxiway data 120 from a data store 122 and can receive as input user selection data 124 from the GUI manager control module 110. The traffic data 112 can comprise data regarding the air traffic and/or ground traffic surrounding the aircraft 10 during the operation of the aircraft 10, which can be received from the operational data source 26. The weather data 114 can comprise data regarding the weather surrounding the aircraft 10 and along the flight plan for the aircraft 10. The weather data 114 can also be received from the operational data source 26. The ITP data 116 can comprise in-trail procedure data regarding the operation of the aircraft 10, such as the altitude, the altitudes of surrounding aircraft, etc. The 4DT data 118 can comprise four-dimensional (4D) trajectory data for the path of the aircraft 10, which can be received from the operational data source 26. The taxiway data 120 can comprise data regarding a taxiway of one or more of the airports along the flight plan of the aircraft 10, which can be stored in the data store 122. The taxiway data 120 can also include data regarding the selected airport along the flight plan of the aircraft 10. It should be noted that the taxiway data 120 could also be provided to the background control module 102 from the operational data source 26, if desired. The user selection data 124 can comprise data received from the user input devices 20a, 20b. In one example, the user selection data 124 can comprise a selection of a type of background data to be displayed on the displays 18a, 18b, such as the traffic data 112, weather data 114, ITP data 116, and 4DT data 118.

Based on the traffic data 112, weather data 114, ITP data 116, 4DT data 118, taxiway data 120 and user selection data 124, the background control module 102 can set background data 126 for the GUI manager control module 110. The background data 126 can comprise a background image that can be displayed on the displays 18a, 18b. As will be discussed, illustrations and/or annotations can be superimposed over the background data 126.

The illustration control module 104 can receive as input user selection data 124 and movement data 128. In one example, the user selection data 124 can comprise a selection of a type of illustrator or symbol for display on the displays 18a, 18b, as will be discussed in greater detail herein. The movement data 128 can comprise movement associated with a user input device relative to the displays 18a, 18b, including, but not limited to, the movement of a stylus over the displays 18a, 18b, the movement of a finger over the displays 18a, 18b, etc. Based on the user selection data 124 and movement data 128, the illustration control module 104 can set illustration data 130 for the GUI manager control module 110. The illustration data 130 can comprise an illustration of the movement for display on the displays 18a, 18b using a selected illustrator. The illustration data 130 can also comprise data regarding the placement of a selected symbol on the displays 18a, 18b. The illustration data 130 can be superimposed on the background data 126 output on the displays 18a, 18b.

The annotation control module 106 can receive as input user selection data 124 and text data 132. In one example, the user selection data 124 can comprise a selection by the user to annotate the background data displayed on the displays 18a, 18b. The text data 132 can comprise selected text or text entered by the user via the respective user input device 20a, 20b for annotating the illustration data 130 displayed on the displays 18a, 18b. Based on the user selection data 124 and the text data 132, the annotation control module 106 can set annotation data 134 for the GUI manager control module 110. The annotation data 134 can comprise an annotation for the background image displayed on the displays 18a, 18b. The annotation data 134 can be superimposed on the background data 126 output on the displays 18a, 18b.

The activation control module 108 can receive as input user selection data 124. In one example, the user selection data 124 can comprise a selection to activate telestration on a selected displays 18a, 18b. Based on the user selection data 124, the activation control module 108 can set activation data 136 for the GUI manager control module 110. The activation data 136 can comprise a signal to enable shared situational awareness or telestration on a selected display 18a, 18b.

The GUI manager control module 110 can receive as input user input data 137, the background data 126, the illustration data 130, the text data 132, the annotation data 134, and the activation data 136. The user input data 137 can comprise input received from the user input devices 20a, 20b, and can include, but is not limited to, data regarding a selection, movement of of the user input device 20a, 20b relative to the display 18a, 18b, and textual data for annotating an illustration. Based on the user selection data 124, the background data 126, the illustration data 130, the text data 132, the annotation data 134, and the activation data 136, the GUI manager control module 110 can output a weather GUI 138, an ITP GUI 140, a 4DT GUI 142, a traffic GUI 144, and a taxiway GUI 146 for display on the displays 18a, 18b when telestration is activated. The GUI manager control module 110 can also output the illustration data 130 and annotation data 134, which can be superimposed on the selected one of the weather GUI 138, ITP GUI 140, 4DT GUI 142, traffic GUI 144, and taxiway GUI 146.

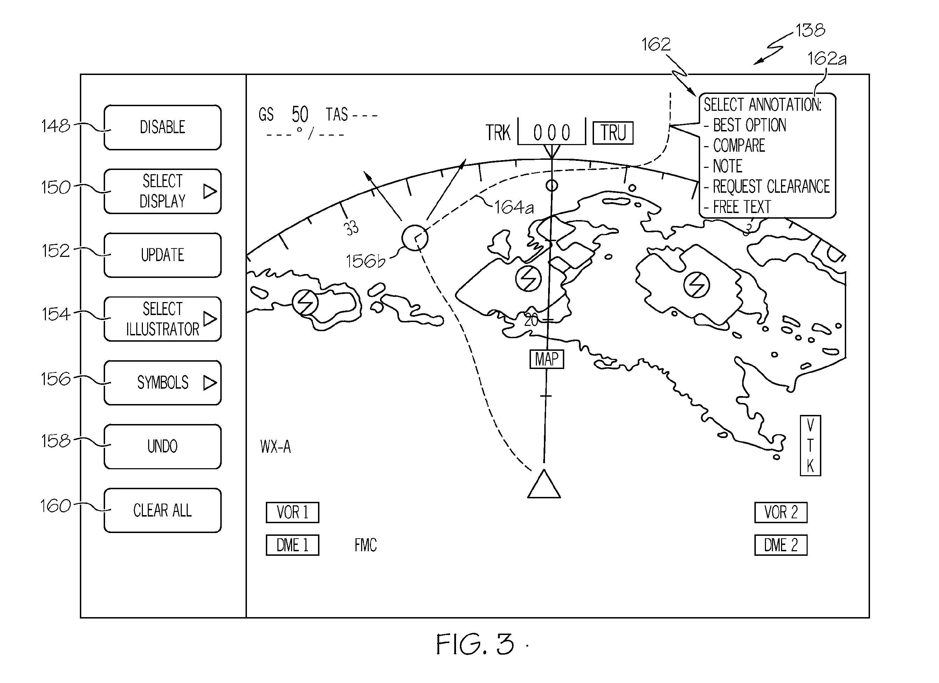

With reference to Fig. 3, an exemplary weather GUI 138 is illustrated. The weather GUI 138 can display a weather map as a background image, which can be generated from the weather data 114. In one exemplary embodiment, the weather GUI 138 can include an activation selector 148, a display selector 150, an update selector 152, an illustrator selector 154, a symbol selector 156, an undo selector 158, a clear all selector 160 and an annotation selector 162. One or more of the activation selector 148, display selector 150, update selector 152, illustrator selector 154, symbol selector 156, undo selector 158 and clear all selector 160 can be superimposed on the background data 126 or weather map.

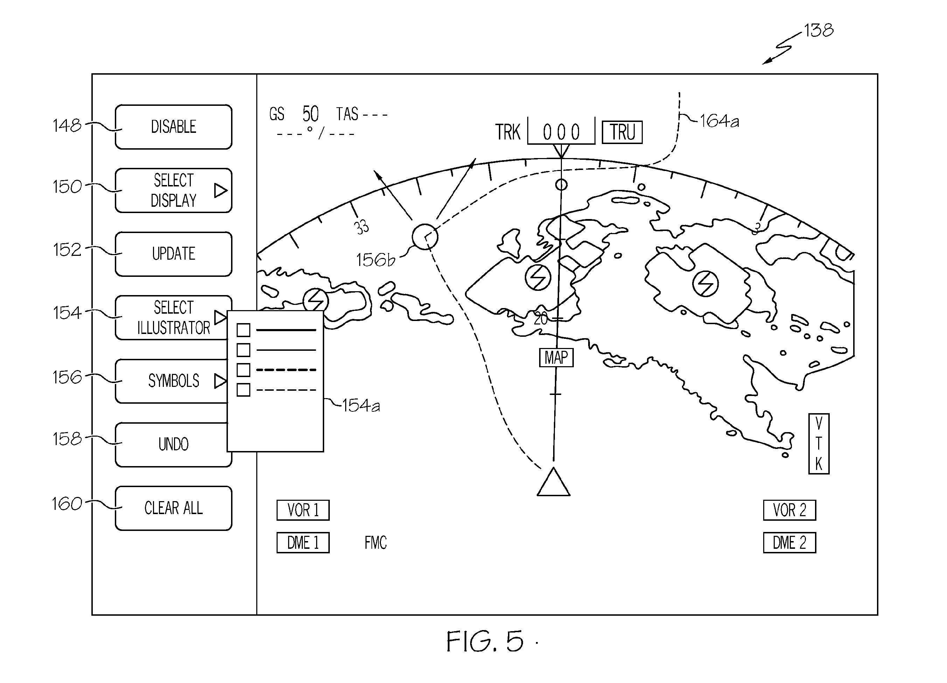

The activation selector 148 can enable the user to activate telestration on their respective display 18a, 18b. In one example, if telestration is activated, the activation selector 148 can display "Disable," and if un-activated, the activation selector 148 can display "Activate" (Fig. 5).

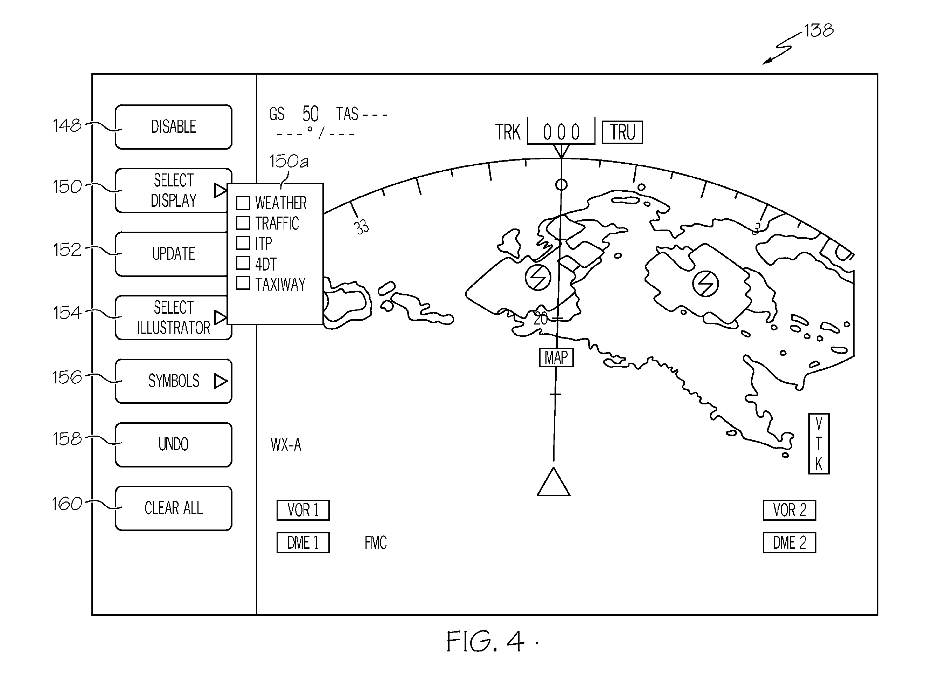

With reference to Fig. 4, the display selector 150 can enable the user to select the desired background data 126 for display on the display 18a, 18b. In one example, the selection of the display selector 150 can generate a drop-down list 150a that lists the background data 126 available to display. In other words, the display selector 150 can enable the user to switch between the weather GUI 138, ITP GUI 140, 4DT GUI 142, traffic GUI 144, and taxiway GUI 146 for display on the displays 18a, 18b, when telestration is active. The update selector 152, when selected, can refresh the display on the displays 18a, 18b to ensure the most up to date information is available on the selected display 18a, 18b.

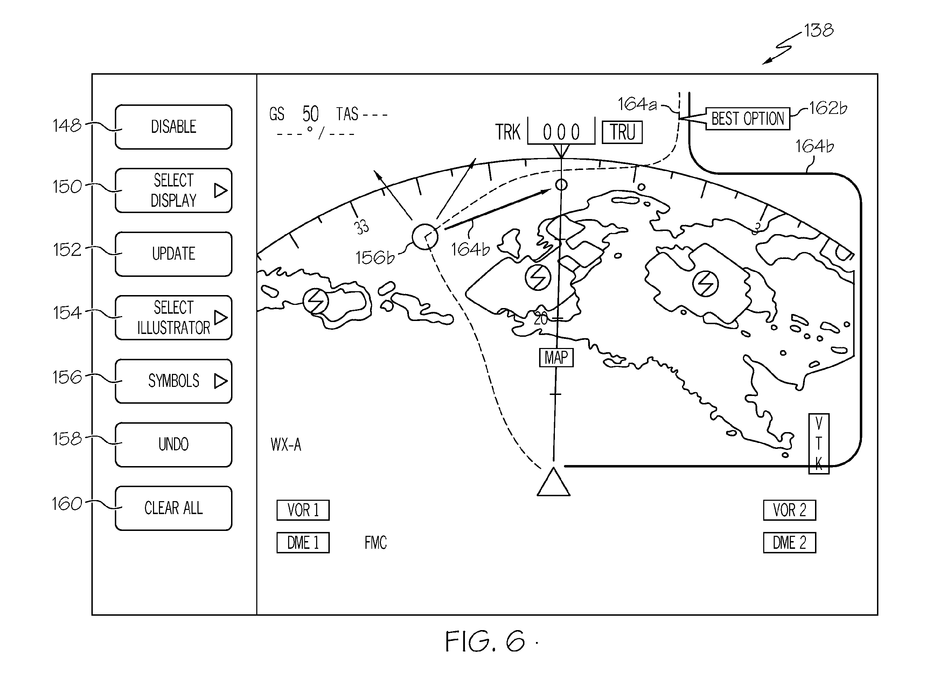

With reference to Fig. 5, the illustrator selector 154 can enable the selection of a graphical illustrator that represents each user's desired illustrations on the displays 18a, 18b. When selected, a drop-down list 154a can be generated that provides various line styles and colors for use by the user. For example, the user can choose from solid or broken lines in various thicknesses and colors. The selected line style and color can be superimposed on the background data 126 as the illustration data 130 based on the user's movement on the display 18a, 18b. In one example, with reference to Fig. 6, a first user, such as a pilot, selected a broken line, which can be displayed as an illustration 164a, and a second user, such as a co-pilot, selected a solid line, which can be displayed as an illustration 164b. The illustrations 164a, 164b can be superimposed on the background image to enable shared situational awareness between the pilot and co-pilot, for example.

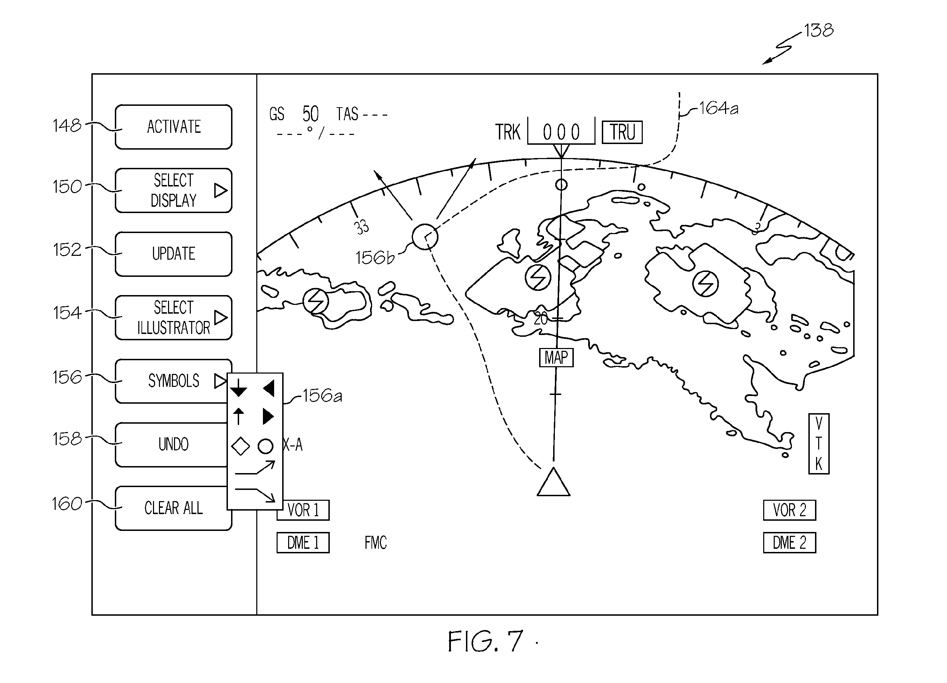

With reference to Fig. 7, the symbol selector 156 can enable the user to select one or more symbols to aid in their illustration. The selection of the symbol selector 156 can generate a drop-down list 156a that can display one or more symbols from which the user can choose. In one example, the symbols can be populated based on the selected one of the weather GUI 138, ITP GUI 140, 4DT GUI 142, traffic GUI 144, and taxiway GUI 146. For example, a symbol 156b can be selected by the user and positioned at a desired location on the background image, such that the symbol 156b is superimposed on the background image.

With continued reference to Fig. 7, the undo selector 158 can remove the last made illustration or annotation from the active GUI, and the clear all selector 160 can remove all of the illustration data 130 and annotation data 134 superimposed on the active GUI, which in this example, can comprise the weather GUI 138.

With reference back to Fig. 3, the annotation selector 162 can provide a list 162a of annotation text available for selection by the user. Exemplary annotation text includes, but is not limited to, "Best Option," "Compare," "Note" and "Request Clearance." As illustrated in Fig. 6, the selected annotation text can be superimposed on the background image adjacent to the illustration 164a, 164b. The annotation selector 162 can also include an option for "Free Text," which can enable the user to input text for superimposing on the background image displayed on the display 18a, 18b. In one example, the selection of "Free Text" can generate a pop-up box for the entering of the user's text, but can also display a keyboard, so that the user can type the desired text directly on the display 18a, 18b, if desired. In addition, in one exemplary embodiment, the annotation selector 162 can be generated when the user moves the user input device 20a, 20b over a portion of the illustration data 130. It should be noted that the annotation selector 162 could be provided as a button superimposed on the selected one of the GUIs, or the annotation selector 162 could be displayed when the user provides an input to the user input device 20a, 20b, including, but not limited to, right-clicking or double clicking using the user input device 20a, 20b.

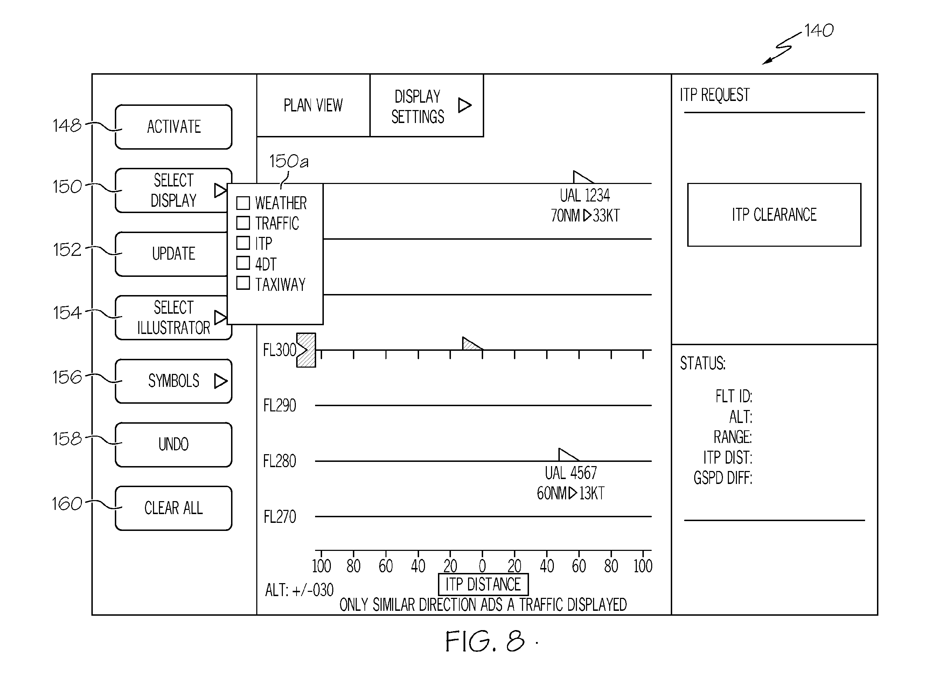

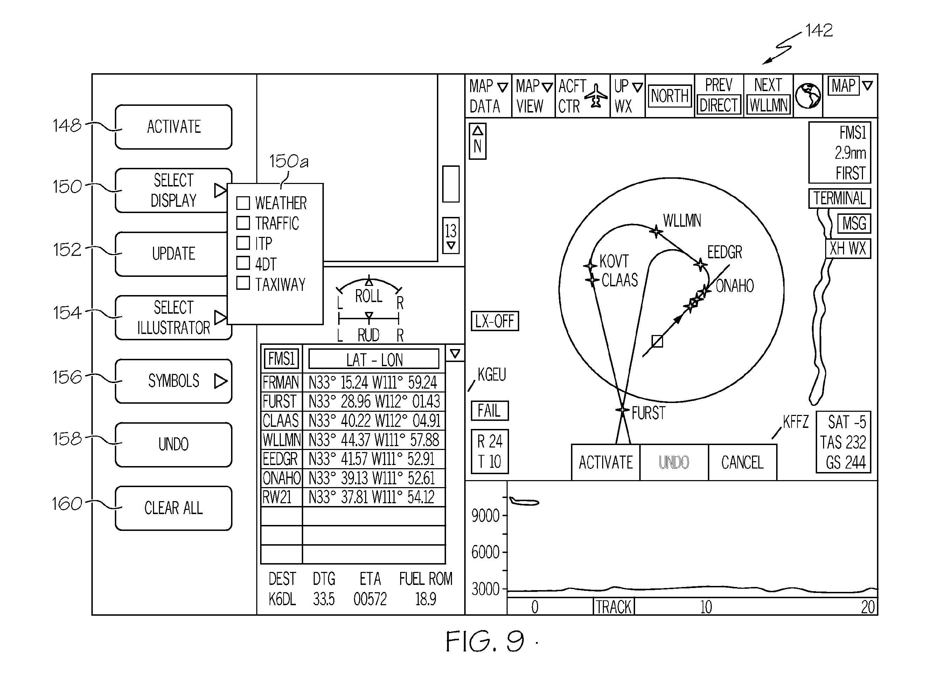

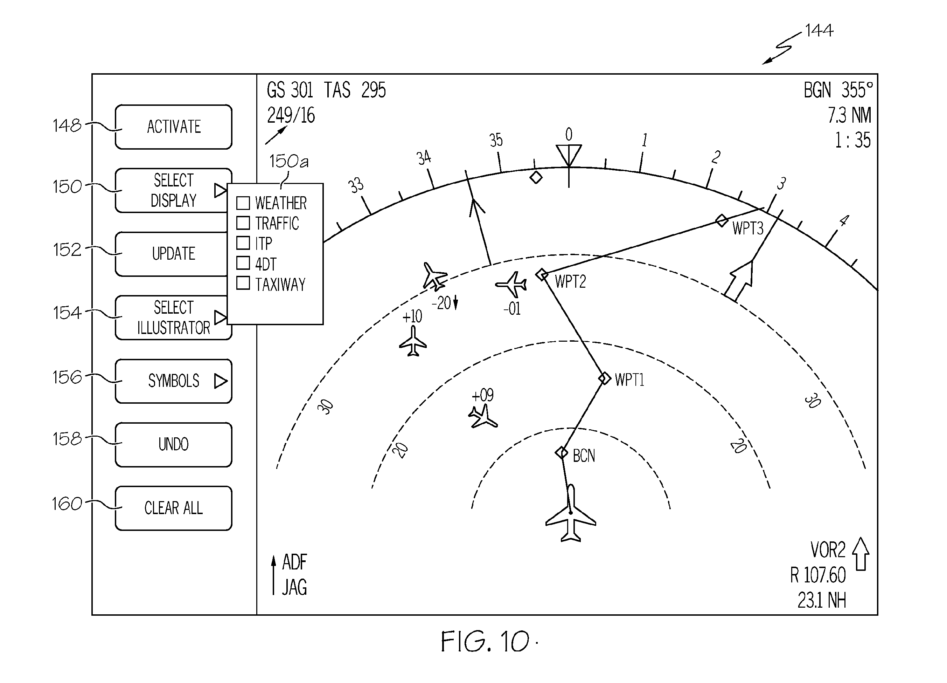

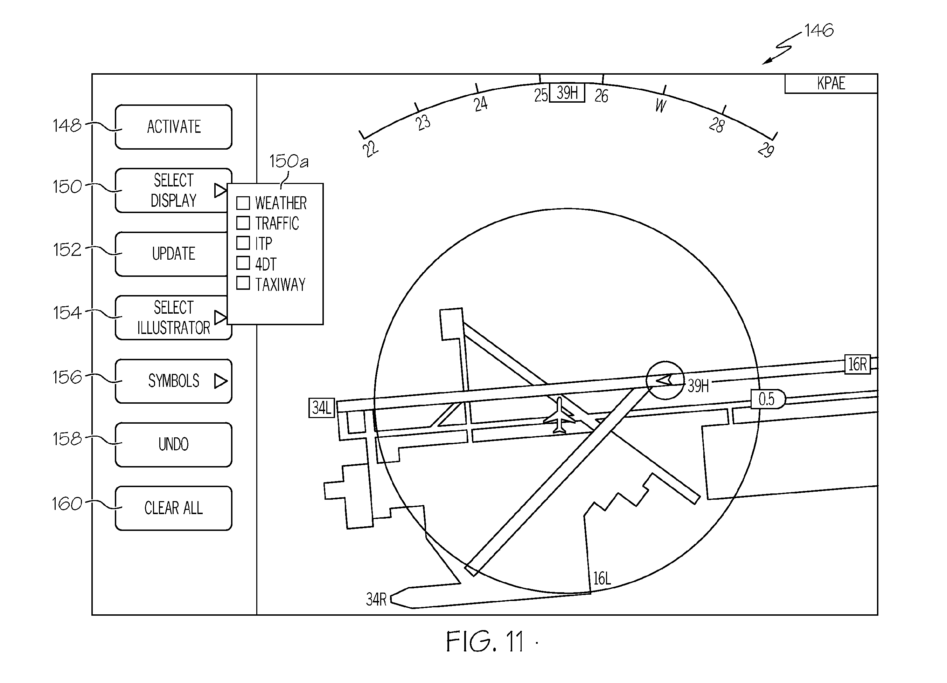

With reference now to Fig. 8, the ITP GUI 140 is illustrated, which can be displayed on the displays 18a, 18b. The ITP GUI 140 can display as the background data 126 data provided by the ITP data 116. With reference to Fig. 9, the 4DT GUI 142 is shown, which can be displayed on the displays 18a, 18b. The 4DT GUI 142 can display as background data 126 data generated from the 4DT data 118. Referring to Fig. 10, the traffic GUI 144 is shown, which can display as background data 126 data generated from the traffic data 112. The traffic GUI 144 can be displayed on the displays 18a, 18b. With reference to Fig. 11, the taxiway GUI 146 is shown, which can be displayed on the displays 18a, 18b. The taxiway GUI 146 can display as background data 126 data generated from the taxiway data 120 obtained from the data store 122.

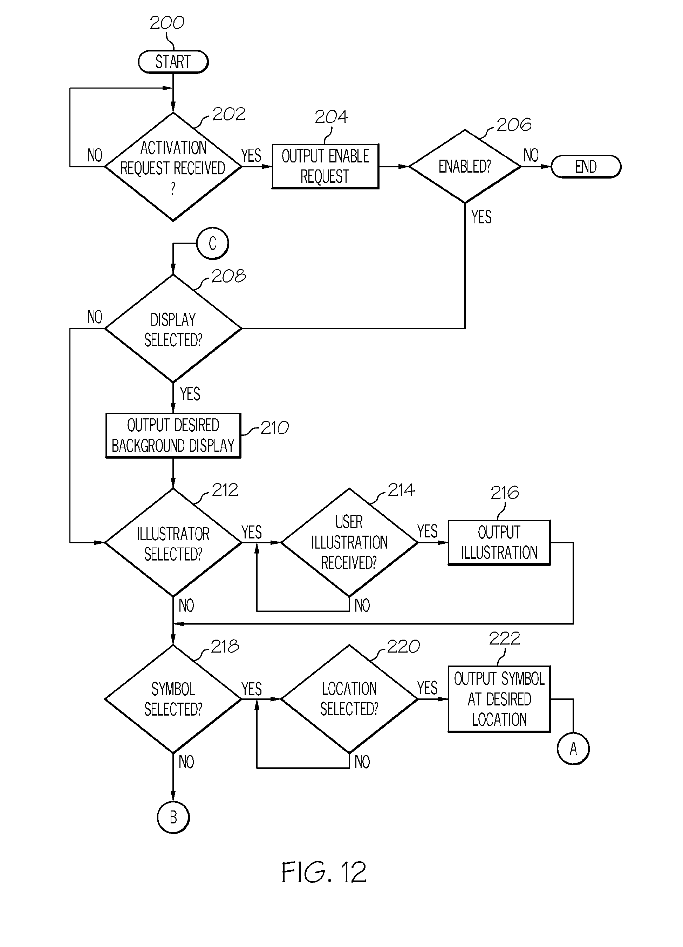

Referring now to Figs. 12-13, and with continued reference to Figs. 1-11, a flowchart illustrates a control method that can be performed by the control module 100 of Fig. 2 in accordance with the present disclosure. As can be appreciated in light of the disclosure, the order of operation within the method is not limited to the sequential execution as illustrated in Fig. 3, but may be performed in one or more varying orders as applicable and in accordance with the present disclosure.

In various embodiments, the method can be scheduled to run based on predetermined events, and/or can run continually during operation of the aircraft 10.

The method can begin at 200. At 202, the method can determine if an activation request has been received from the user input device 20a, 20b. If no activation request has been received, then the method loops. Otherwise, the method at 204 can output a request to enable shared situational awareness or telestration between the displays 18a, 18b. This can prompt a pop-up GUI on a respective one of the displays 18a, 18b, which can prompt the user to enable or disable telestration. If telestration is enabled at 206, then the method can go to 208. Otherwise, the method can end.

At 208, the method can determine if a display is selected through user input received from the display selector 150. If a display is selected, then the method can output the desired one of the weather GUI 138, ITP GUI 140, 4DT GUI 142, traffic GUI 144, and taxiway GUI 146 at 210. Otherwise, at 212, the method can determine if a line style and color is selected through user input to the illustrator selector 154. If a line style and color is selected, then at 214, the method can determine if user movement of the respective user input device 20a, 20b on the respective display 18a, 18b has been received. If movement data 128 has been received, then the method can output illustration data 130 superimposed over the selected one of the weather GUI 138, ITP GUI 140, 4DT GUI 142, traffic GUI 144, and taxiway GUI 146 at 216. Otherwise, the method can loop until movement data 128 is received.

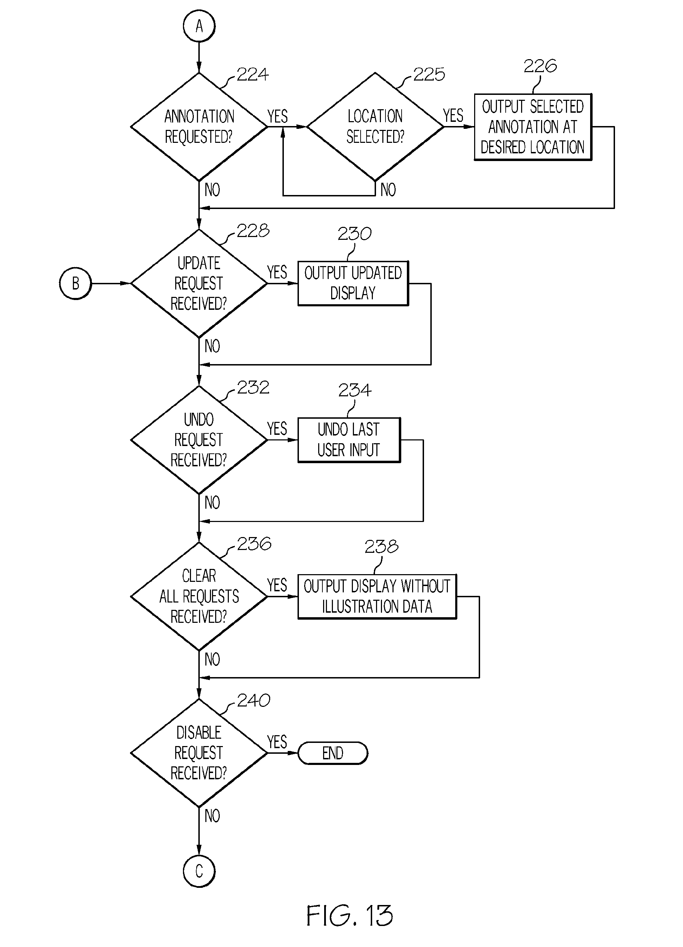

At 218, the method can determine if a symbol has been selected from the symbol selector 156. If a symbol has been selected, at 220, the method can determine if the user has identified a location for the symbol on the selected one of the weather GUI 138, ITP GUI 140, 4DT GUI 142, traffic GUI 144, and taxiway GUI 146. The location can be selected by dragging the selected symbol to a location on the selected GUI, for example. In an alternative example, the location can be selected by selecting the symbol from the symbol selector 156 and then selecting a location for the symbol on the selected GUI. If a location has been selected, then at 222, the method can superimpose the symbol on the selected one of the weather GUI 138, ITP GUI 140, 4DT GUI 142, traffic GUI 144, and taxiway GUI 146 at the selected location as illustration data 130. Then, the method can go to A on Fig. 13. If no symbol has been selected, then the method can go to B on Fig. 13.

From A, the method can determine, at 224, if an annotation request has been received. If an annotation request has been received, at 225, the method can determine if the user has identified a location for the annotation on the selected one of the weather GUI 138, ITP GUI 140, 4DT GUI 142, traffic GUI 144, and taxiway GUI 146. For example, the location can be selected when the user moves the user input device 20a, 20b over a portion of the illustration data 130. If a location has been selected, then at 226, the method can output the selected annotation by superimposing annotation data 134 on the selected one of the weather GUI 138, ITP GUI 140, 4DT GUI 142, traffic GUI 144, and taxiway GUI 146, for example. Then, at 228, the method can determine if an update request has been received from the update selector 152. If an update request has been received, then at 230, the method can output the most recent illustration data 130 and annotation data 134 for display on respective display 18a, 18b. At 232, the method can determine if a request to undo the last illustration or annotation has been received through the undo selector 158. If an undo request has been received, then the method can remove the last user input on the displays 18a, 18b at 234.

At 236, the method can determine if the user has selected the clear all selector 160. If the user has selected the clear all selector 160, then the method can output the selected one of the weather GUI 138, ITP GUI 140, 4DT GUI 142, traffic GUI 144, and taxiway GUI 146 without any illustration data 130 and annotation data 134 at 238. At 240, the method can determine if a disable request has been received. If a disable request has been received, then the method can end at 242. Otherwise, the method can go to C on Fig. X.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the present disclosure as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the present disclosure in any way. Rather, the foregoing detailed description will provide those skilled in the art with a convenient road map for implementing an exemplary embodiment of the present disclosure. It being understood that various changes may be made in the function and arrangement of elements described in an exemplary embodiment without departing from the scope of the present disclosure as set forth in the appended claims.

## Claims

1. A system for shared situational awareness between a first display and a second display onboard an aircraft, each of the first display and the second display being associated with a respective first user input device and second user input device that each receive user input with respect to the first display and the second display, the system comprising:
a source of data regarding the operation of the aircraft;
an illustration control module that receives user selection data and user input data from the first user input device and the second user input device and that sets illustration data based on the user selection data and user input data; and
a graphical user interface manager control module that outputs a graphical user interface that includes the data regarding the operation of the aircraft and the illustration data, the graphical user interface being displayed on both the first display and the second display to enable shared situational awareness between the first display and the second display.

2. The system of Claim 1, wherein the data regarding the operation of the aircraft is selected from the group comprising: traffic data, weather data, in-trail procedure data, taxiway data, four-dimensional trajectory data, and combinations thereof.

3. The system of Claim 1, further comprising:
a background control module that receives user selection data from the graphical user interface manager control module and the data regarding the operation of the aircraft, and based on the user selection data sets background data for the graphical user interface manager control module that includes a background image to display on the first display and second display.

4. The system of Claim 3, wherein the illustration data is superimposed on the background image.

5. The system of Claim 3, further comprising:
an annotation control module that receives user selection data and text data from the graphical user interface manager control module, and based on the user selection data and text data sets annotation data for the graphical user interface manager control module, the annotation data including text for display on the first display and second display.

6. The system of Claim 5, wherein the annotation data is superimposed on the background image adjacent to the illustration data.

7. The system of Claim 4, wherein the illustration data comprises a line or a symbol.

8. The system of Claim 1, wherein the graphical user interface manager control module receives user input data to activate the display of the graphical user interface on both the first display and the second display.

9. The system of Claim 6, wherein the graphical user interface manager control module receives user input data from the first user input device and the second user input device, and sets the user selection data based on the user input data.

10. A method for shared situational awareness between a first display and a second display onboard an aircraft, each of the first display and the second display being associated with a respective first user input device and second user input device that each receive user input with respect to the first display and the second display, comprising:
receiving a request to activate a shared situational awareness system to enable telestration between the first display and the second display;
determining, based on user input received from the first user input device and the second user input device, if a request to change a background image displayed on the first display and the second display has been received; and
outputting a different background image for display on the first display and second display that is generated from data relating to the operation of the aircraft.

11. The method of Claim 10, further comprising:
generating the background image based on weather data regarding the weather surrounding and along a flight plan for the aircraft.

12. The method of Claim 10, further comprising:
generating the background image based on traffic data regarding at least one of air traffic and ground traffic surrounding the aircraft along the flight plan for the aircraft.

13. The method of Claim 10, further comprising:
generating the background image based on taxiway data associated with a taxiway of an airport along the flight plan of the aircraft.

14. The method of Claim 10, further comprising:
generating the background image based on in-trail procedure data related to the operation of the aircraft.

15. The method of Claim 10, further comprising:
generating the background image based on a four-dimensional trajectory for the aircraft.
